# EUROPEAN PATENT APPLICATION

(11) **EP 4 593 176 A1**
(43) Date of publication of application: **30.07.2025**
(21) Application number: 23867897.3
(22) Date of filing: 31.07.2023
(51) Int. Cl.: H01M 50/244, H01M 50/213, H01M 50/291, H01M 50/293, H01M 50/505, H01M 50/548

(54) **BATTERY PACK**

(30) Priority: 20.09.2022 JP 2022149571
(71) Applicant: Panasonic Energy Co., Ltd., Osaka 570-8511 (JP)
(72) Inventor: NAMURA, Takashi, Kadoma-shi, Osaka 571-0057 (JP)
(74) Representative: Novagraaf International SA
(86) International application number: PCT/JP2023/027911
(87) International publication number: WO 2024/062771

(57) **Abstract**

The battery pack includes cylindrical battery 1 and battery holder 2 configured to dispose cylindrical battery 1 in the predetermined position. Battery holder 2 includes holding tube 20 configured to internally accommodate cylindrical battery 1 and cover outer circumferential face 12 of cylindrical battery 1. Holding tube 20 includes exposure window 8 opened to allow outer circumferential face 12 of accommodated cylindrical battery 1 to be exposed therefrom to the outside. An exposed part of cylindrical battery 1 exposed from exposure window 8 is fixed to battery holder 2 via adhesive member 5.

## Description

### BACKGROUND

### 1. Technical Field

The present disclosure relates to a battery pack including a cylindrical battery accommodated in a battery holder.

### 2. Description of the Related Art

As a battery pack including chargeable and dischargeable secondary batteries, a battery pack including a plurality of cylindrical secondary batteries has been developed.
This battery pack can increase output voltage by connecting the cylindrical batteries in series and increase charging and discharging currents by connecting the cylindrical batteries in parallel. In this battery pack, the cylindrical batteries are accommodated in a battery holder so that the cylindrical batteries are connected in a predetermined arrangement. The battery holder is shaped to include cylindrical battery accommodation units for accommodating the cylindrical batteries, and the battery accommodation units accommodate the cylindrical batteries so that the cylindrical batteries are accommodated in the predetermined arrangement. End-face electrodes at both ends of each cylindrical battery accommodated in the battery holder are exposed from electrode windows provided in the battery holder. The end-face electrodes exposed from the battery holder are connected by a lead plate, whereby the cylindrical batteries are connected in series or parallel.

Thus, depending on the application, the battery pack including the cylindrical batteries accommodated in the battery holder is sometimes subjected to a load, for example, due to vibration or dropping that causes the cylindrical batteries to rotate inside the battery holder. In this situation, the load is concentrated on a connection between the end-face electrode of the cylindrical battery and the lead plate, and consequently, adverse effects such as faulty connections are sometimes caused. For example, when the lead plate is fixed to the end-face electrodes in the battery pack by welding or other means, the lead plate is sometimes partially cut in the vicinity of a connection between the end-face electrode and the lead plate, and consequently, faulty connections are caused. Such faulty connections not only make it impossible to use the battery pack properly, but may also cause adverse effects such as heat generation, which is not desirable.

To solve these problems, a battery pack configured to prevent a cylindrical battery from rotating has been proposed (see Patent Literature 1).

### Citation List

### Patent Literature

Patent Literature 1: Japanese Unexamined Patent Application Publication No. 2019-083087

### SUMMARY

### Technical Problem

The battery pack described in the above-mentioned publication includes: a chargeable and dischargeable cylindrical battery; and a battery holder configured to dispose the cylindrical battery in a predetermined position. The battery holder includes a battery accommodation unit including: a surrounding wall configured to cover the outer circumferential face of the cylindrical battery; and end-face plates facing end faces of the cylindrical battery, and configured to accommodate the cylindrical battery by using the surrounding wall and the end-face plates. The battery holder further includes an inclined projection provided at an end of the battery accommodation unit and the boundary between the inner face of the end-face plate and the inner circumferential face of the surrounding wall and configured to partially press an end corner of the cylindrical battery accommodated in the battery accommodation unit. The inclined projection is shaped so that the amount of projection from the inner circumferential face of the surrounding wall gradually increases toward the end-face plate.

The above-described battery pack has an advantage in that, while the cylindrical battery is accommodated in the battery accommodation unit of the battery holder, the end-face corner of the cylindrical battery is partially pressed against the inclined projection provided at the boundary between the inner face of the end-face plate and the inner circumferential face of the surrounding wall, whereby the cylindrical battery is accommodated in the predetermined position in the battery accommodation unit to effectively prevent the cylindrical battery from rotating. Furthermore, the battery pack has an advantage in that the inclined projection is shaped so that the amount of projection from the inner circumferential face of the surrounding wall gradually increases toward the end-face plate, and thus the cylindrical battery can be surely prevented from moving in the axial direction.

However, the above-described structure in which the inclined projection is provided inside the battery accommodation unit and the end of the cylindrical battery is pressed against the inclined projection for positioning has a problem in that it is difficult to adjust the amount of projection of the inclined projection. This is because there are manufacturing errors in the external shape of the cylindrical battery and the internal shape of the battery accommodation unit of the battery holder and accordingly the shape and the amount of projection of the inclined projection need to be adjusted in consideration of these errors. When the amount of projection of the inclined projection is too small, the cylindrical battery cannot be surely held without rotating. Conversely, when the amount of projection of the inclined projection is too large, it is difficult to quickly insert the cylindrical battery into the predetermined position in the battery accommodation unit. In addition, there is a problem in that a die used to form the battery holder is complicated, which results in higher manufacturing costs. In addition, there is a problem in that the inclined projection formed of resin deteriorates over time, which makes it difficult to hold the cylindrical battery stably for a long time without causing the rotation of the cylindrical battery.

The present invention has been developed to solve the above-described problems.
An object of the present invention is to provide a battery pack that can hold a cylindrical battery in a predetermined position while effectively preventing the cylindrical battery accommodated in a battery holder from rotating due to vibration, impacts, or the like and thereby can effectively prevent adverse effects caused by the rotation of the cylindrical battery.

### Solution to Problem

A battery pack according to one aspect of the present invention includes: a cylindrical battery; and a battery holder configured to dispose the cylindrical battery in a predetermined position. The battery holder includes a holding tube configured to internally accommodate the cylindrical battery and cover the outer circumferential face of the cylindrical battery. In the holding tube, an exposure window is opened to allow the outer circumferential face of the accommodated cylindrical battery to be exposed therefrom to the outside, and an exposed part of the cylindrical battery exposed from the exposure window is fixed to the battery holder via an adhesive member.

### Advantageous Effects of Invention

The battery pack of the present invention has an advantage in that the cylindrical battery accommodated in the battery holder can be effectively prevented from rotating due to vibration, impacts, or the like and thereby adverse effects caused by the rotation of the cylindrical battery can be effectively prevented.

### BRIEF DESCRIPTION OF THE DRAWINGS

FIG. 1 is an external perspective view of a battery pack according to an embodiment of the present invention.
FIG. 2 is a perspective view illustrating a manufacturing process of the battery pack illustrated in FIG. 1.
FIG. 3 is an exploded perspective view of a battery assembly of the battery pack illustrated in FIG. 2.
FIG. 4 is an exploded perspective view of a battery holder of the battery assembly illustrated in FIG. 3.
FIG. 5 is a side view of the battery assembly illustrated in FIG. 2.
FIG. 6 is a cross-sectional view of the battery assembly, taken along line VI-VI, illustrated in FIG. 2.
FIG. 7 is a cross-sectional view of the battery assembly, taken along line VII-VII, illustrated in FIG. 2.
FIG. 8 is an enlarged cross-sectional perspective view of a holding tube including an exposure window.
FIG. 9 is an enlarged cross-sectional view of the exposure window illustrated in FIG. 6.
FIG. 10 is an enlarged front view of the exposure window illustrated in FIG. 4.
FIG. 11 is an enlarged cross-sectional view illustrating another example in which an adhesive tape is provided in the exposure window.
FIG. 12 is an enlarged cross-sectional view illustrating another example in which an adhesive agent is provided in the exposure window.

### DETAILED DESCRIPTIONS

A battery pack according to an embodiment of the present invention includes a cylindrical battery and a battery holder configured to dispose the cylindrical battery in a predetermined position. The battery holder includes a holding tube configured to internally accommodate the cylindrical battery and cover the outer circumferential face of the cylindrical battery. In the holding tube, an exposure window is opened to allow the outer circumferential face of the accommodated cylindrical battery to be exposed therefrom to the outside, and an exposed part of the cylindrical battery exposed from the exposure window is fixed to the battery holder via an adhesive member.

In the above-described battery pack, the outer circumferential face of the cylindrical battery accommodated in the holding tube of the battery holder is exposed to the outside from the exposure window provided in the holding tube and the exposed part is fixed to the battery holder via the adhesion member. Thus, while clearance between the holding tube and the cylindrical battery is fully secured to make manufacturing and assembly simpler, the cylindrical battery is surely fixed to the battery holder, whereby an adverse effect of the rotation of the cylindrical battery inside the holding tube can be surely prevented. Thus, the battery pack configured to prevent the rotation of the cylindrical battery has the advantage of effectively preventing adverse effects such as faulty connections caused by the rotation of the cylindrical battery.

A battery pack according to another embodiment of the present invention includes a plurality of cylindrical batteries, in which a battery holder includes a plurality of holding tubes configured to accommodate the cylindrical batteries in parallel, and each of the holding tubes includes a partition wall disposed between the adjacent cylindrical batteries and a surrounding wall forming the outer face of the battery holder, and an exposure window is provided to be opened in the surrounding wall.

In the above-described battery pack, while the cylindrical batteries are accommodated in the holding tubes, the outer circumferential face of each of the cylindrical batteries is exposed from the exposure window provided in the surrounding wall forming the outer face of the battery holder, and thus all the cylindrical batteries can be fixed to the battery holder via an adhesive member.

A battery pack according to another embodiment of the present invention further includes a lead plate configured to electrically connect a plurality of cylindrical batteries disposed in a predetermined position in a battery holder, in which each of the cylindrical batteries includes end-face electrodes at both ends thereof, the battery holder includes an end-face plate facing the end-face electrodes of the cylindrical batteries, an electrode window from which the end-face electrode is exposed is provided in the end-face plate, the lead plate is coupled to the end-face electrodes exposed from each of the electrode windows to connect the cylindrical batteries in series and/or in parallel.

In the above-described battery pack, the rotation of the cylindrical batteries in the battery holder is prevented with a structure in which the end-face electrodes of the cylindrical batteries held in the predetermined position by the battery holder are connected to the lead plate, whereby a connection between the end-face electrodes and the lead plate can be prevented from being damaged to maintain a stably energized state.

A battery pack according to another embodiment of the present invention is configured such that the battery holder includes an exposure window positioned at an end of a holding tube.

In the above-described battery pack, the exposure window is provided at the end of the holding tube of the battery holder so that the end of the cylindrical battery can be fixed to the battery holder. Thus, a part of the cylindrical battery, the part being closer to the end-face electrode connected to the lead plate, is surely fixed to the battery holder, whereby faulty connections between the end-face electrode and the lead plate can be prevented effectively.

A battery pack according to another embodiment of the present invention is configured such that an adhesive tape is used as an adhesive member, and an adhesive face of the adhesive tape is attached to both an exposed part of a cylindrical battery exposed from the exposure window and an opening edge of the exposure window.

In the above-described battery pack, the exposed part of the cylindrical battery can be fixed to a battery holder more simply and easily in a short period of time by using the adhesive tape.

A battery pack according to another embodiment of the present invention is configured such that an exposure window is in the shape of a rectangle in the front view, the exposure window including a pair of first opening edges cut in the direction of a generating line of a holding tube and a pair of second opening edges cut in a direction intersecting the first opening edges, and an opening edge of the exposure window to which the adhesive tape is attached is a cut face of the holding tube cut along the pair of the first opening edges.

In the above-described battery pack, the exposure window opened in the holding tube is in the shape of the rectangle in the front view, the exposure window including the pair of the first opening edges and the pair of the second opening edges, and the opening edge of the exposure window to which the adhesive tape is attached is the cut face of the holding tube cut along the pair of the first opening edges extending in the direction of the generating line, and therefore, by fixing an exposed part exposed from the exposure window to the opening edge in the first opening edges provided in the rotation direction of the cylindrical battery by the adhesive tape, the rotation of the cylindrical battery can be prevented more effectively.

A battery pack according to another embodiment of the present invention is configured such that the cut faces formed on both sides of the exposure window are in the shape of a plane in a transverse-sectional view of the holding tube, the plane extending in the direction of a tangent to a center part of the outer circumferential face of the cylindrical battery which is exposed from the exposure window.

In the above-described battery pack, the cut faces formed on both sides of the exposure window are in the shape of the plane extending in the direction of a tangent to the center part of the outer circumferential face of the cylindrical battery which is exposed from the exposure window, and therefore a middle part of an adhesive tape to be attached across the cut faces is attached to the outer circumferential face of the cylindrical battery between the cut faces, whereby the cylindrical battery can be surely fixed to the battery holder. In particular, the cut faces formed on both sides of the exposure window are in the shape of a plane extending in the direction of a tangent to the outer circumferential face, whereby the adhesive tape can be attached at a predetermined position in the state of being stretched, and thus, with simpler positioning of the adhesive tape, the cylindrical battery can be fixed more simply and easily.

A battery pack according to another embodiment of the present invention is configured such that the cut faces are inclined or curved relative to a plane including the central axis of a cylindrical battery and a first opening edge, and each of the cut faces forms an obtuse angle with the outer circumferential face of the cylindrical battery exposed from the exposure window.

In the above-described battery pack, each of the cut faces to which an adhesive tape is attached is inclined or curved relative to the plane including the central axis of the cylindrical battery and the first opening edge, and forms an obtuse angle with the outer circumferential face of the cylindrical battery exposed from the exposure window, and accordingly the cut faces of the holding cylinder are larger, whereby the adhesive tape can be surely attached to an opening edge of the exposure window and the cylindrical battery can be fixed to the battery holder with stronger adhesive force.

A battery pack according to another embodiment of the present invention is configured such that, in the battery holder, exposure windows opened in a plurality of holding tubes are disposed on a straight line in the front view, the adhesive member is an adhesive tape, the adhesive tape is attached across the exposure windows to fix the cylindrical batteries to the battery holder.

In the above-described battery pack, one piece of the adhesive tape is attached across the exposure windows, whereby the cylindrical batteries can be fixed to the battery holder at the same time and thus the cylindrical batteries are efficiently fixed to the battery holder to achieve a reduction in manufacture time.

A battery pack according to another embodiment of the present invention is configured such that the adhesive member is an adhesive agent.

In the above-described battery pack, by supplying the adhesive agent more simply and easily to a correct point of the outer circumferential face exposed from the exposure window provided in the holding tube, the cylindrical battery can be fixed to the battery holder.

A battery pack according to another embodiment of the present invention is configured such that an exposure window is in the shape of a rectangle in the front view, the exposure window including a pair of first opening edges cut in the direction of a generating line of a holding tube and a pair of second opening edges cut in a direction intersecting the first opening edges, and an adhesive agent is applied to at least the boundaries between the pair of the first opening edges and the outer circumferential face of the cylindrical battery.

In the above-described battery pack, the exposure window opened in the holding tube is in the shape of the rectangle in the front view, the exposure window including the pair of the first opening edges and the pair of the second opening edges, and the adhesive agent is applied to at least the boundaries between the pair of the first opening edges and the outer circumferential face of the cylindrical battery, and thus the first opening edges disposed in the rotation direction of the cylindrical battery are fixed to the outer circumferential face of the cylindrical battery, whereby the rotation of the cylindrical battery can be prevented more effectively.

Hereinafter, an embodiment of the present invention will be described, based on the drawings. The embodiment described below is presented as an example embodying a technical idea of the present invention, and the present invention is not limited to the following. The present specification is not definitely presented to limit constituents described in the claims to corresponding constituents described in the embodiment. Unless otherwise specified, dimensions, materials, shapes, relative positions, and the like of the constituents described in the embodiment are only presented as explanatory examples and are not intended to limit the scope of the present invention. The sizes, positional relationships, and the like of the constituents illustrated in the drawings are sometimes exaggerated to clarify the explanation. Furthermore, in the following description, identical names and reference numerals indicate identical or similar constituents and a detailed description thereof will be omitted as appropriate. In addition, concerning constituents of the present invention, a plurality of constituents may be composed of the same constituent so that one constituent functions as a plurality of constituents, or conversely, a function of one constituent may be shared and implemented by a plurality of constituents.

The battery pack of the present invention can be used, for example, as a power source for electrical apparatuses such as speakers, electric cleaners, and power tools, as a backup power source for servers and a power supply device for homes, businesses, or factories in stationary power storage applications, as a power source for driving assisted bicycles, or as a power source for driving vehicles such as electric scooters, electric carts, hybrid vehicles, and electric vehicles. Hereinafter, a battery pack to be used as a power source for wireless speakers will be described as an embodiment of the present invention.

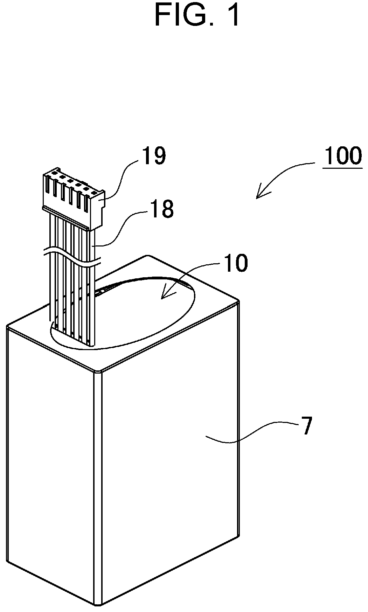

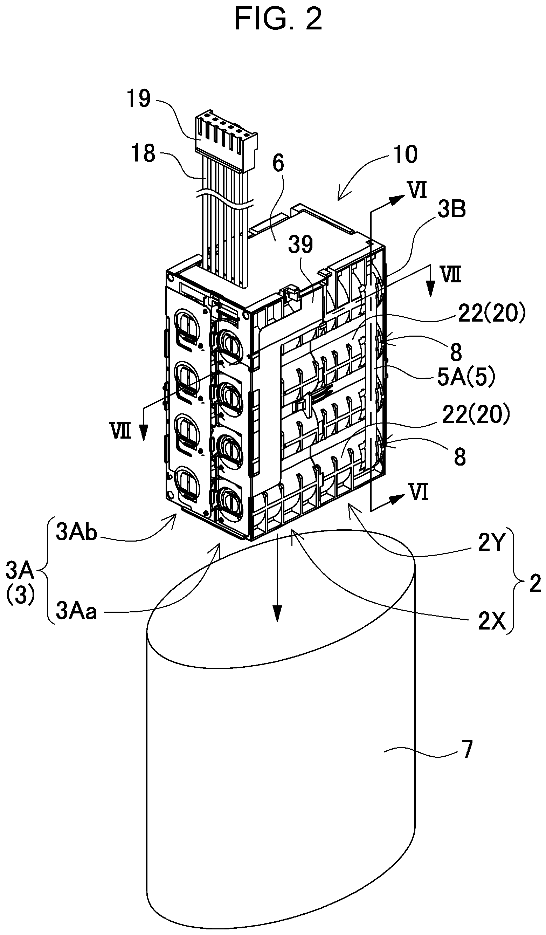

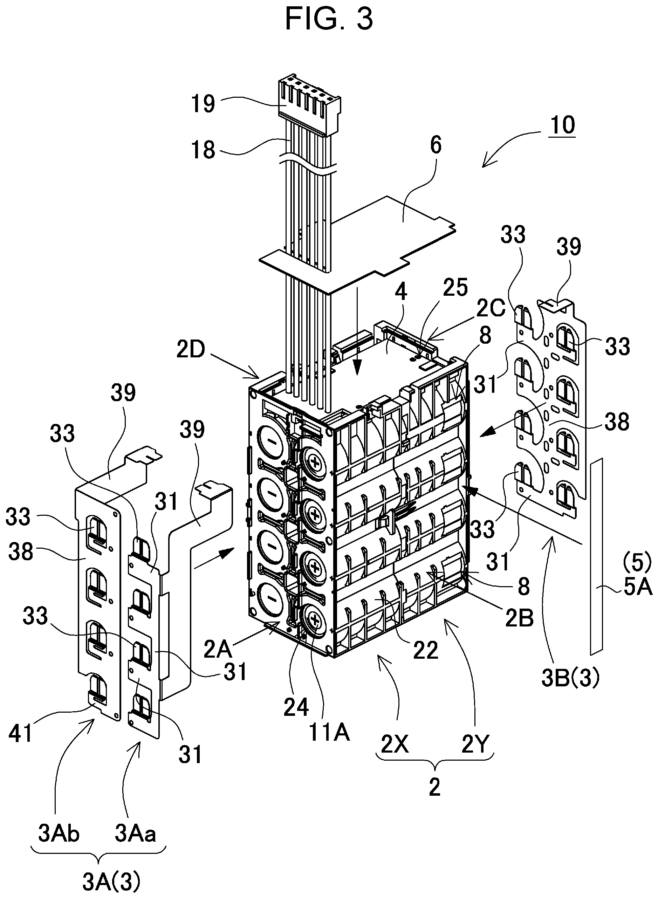

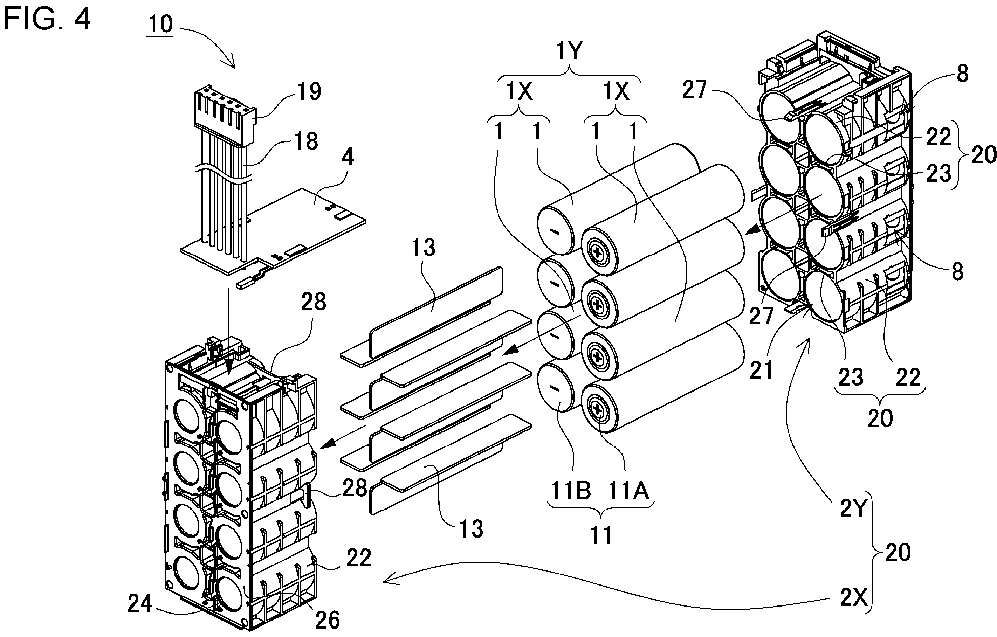

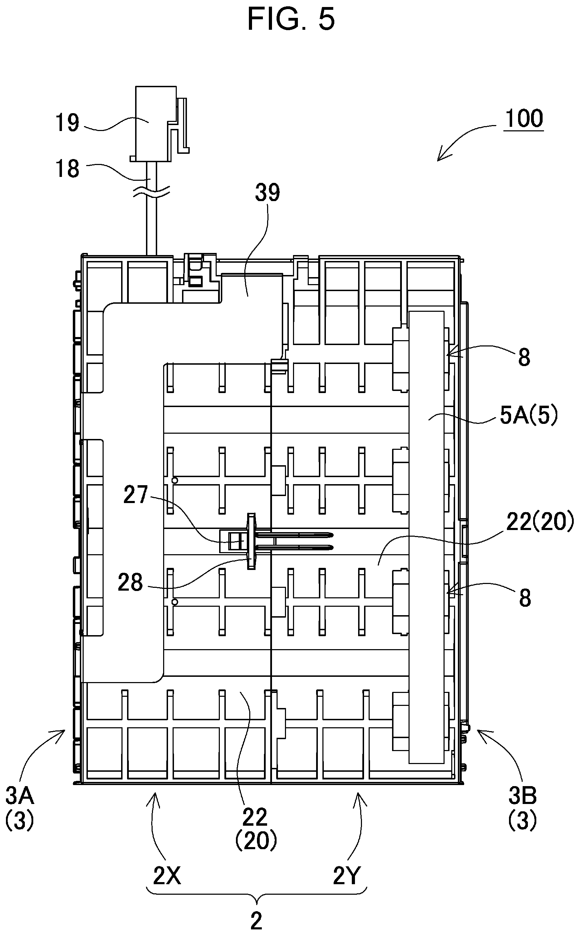

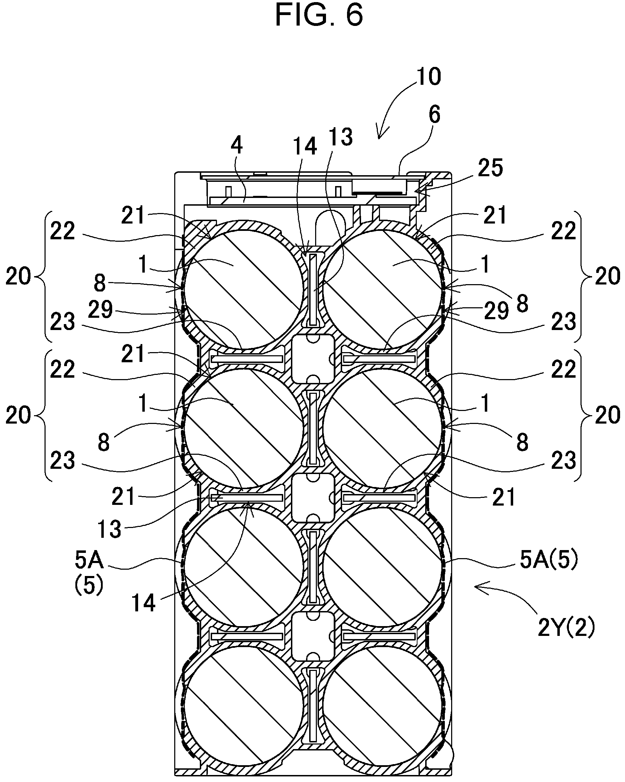

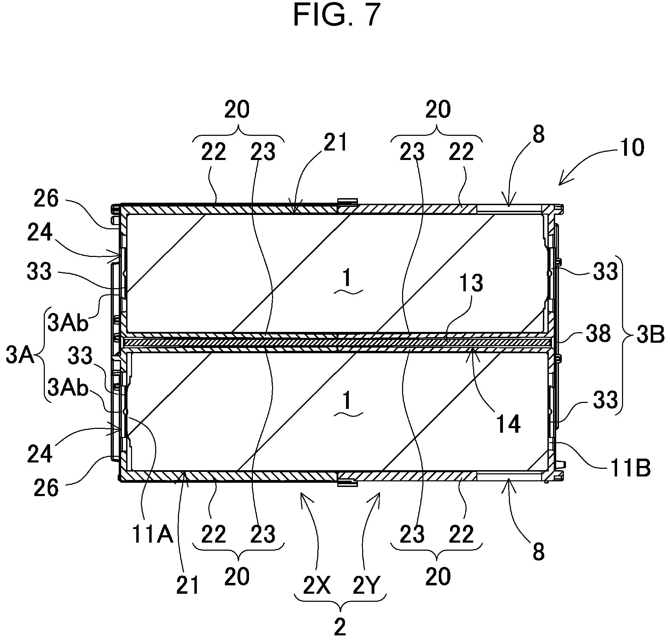

[First Embodiment] Battery pack 100 according to a first embodiment of the present invention is illustrated in FIG. 1 to FIG. 10. FIG. 1 is an external perspective view of the battery pack, FIG. 2 is a perspective view illustrating a manufacturing process of the battery pack illustrated in FIG. 1, FIG. 3 is an exploded perspective view in which a lead plate of a battery assembly illustrated in FIG. 2 is removed, FIG. 4 is an exploded perspective view of a battery holder of the battery assembly illustrated in FIG. 3, FIG. 5 is a side view of the battery assembly illustrated in FIG. 2, FIG. 6 is a cross-sectional view of the battery assembly, taken along line VI-VI, illustrated in FIG. 2, and FIG. 7 is a cross-sectional view of the battery assembly, taken along line VII-VII, illustrated in FIG. 2.

Battery pack 100 illustrated in these drawings includes cylindrical battery 1 and battery holder 2 configured to dispose cylindrical battery 1 in a predetermined position. Battery holder 2 includes holding tube 20 configured to internally accommodate cylindrical battery 1 and cover outer circumferential face 12 of cylindrical battery 1. In holding tube 20, exposure window 8 is opened to allow outer circumferential face 12 of accommodated cylindrical battery 1 to be exposed therefrom to the outside. An exposed part of cylindrical battery 1, the exposed part being exposed from exposure window 8, is fixed to battery holder 2 by adhesive member 5. Hereinafter, battery pack 100 including a plurality of cylindrical batteries 1 will be described as the battery pack according to the first embodiment of the present invention. Battery pack 100 illustrated in the drawings includes cylindrical batteries 1, and battery holder 2 includes a plurality of holding tubes 20 each configured to accommodate a corresponding one of cylindrical batteries 1 disposed in parallel. Battery pack 100 illustrated in the drawings further includes lead plate 3 configured to electrically connect cylindrical batteries 1 disposed in a predetermined position by battery holder 3.

### (Battery Assembly 10)

In battery pack 100 illustrated in FIG. 1 to FIG. 7, each of cylindrical batteries 1 is accommodated in a corresponding one of holding tubes 20 of battery holder 2 and thereby disposed in the predetermined position, lead plates 3 are fixed to both end faces of battery holder 2, circuit board 4 is disposed on the top of battery holder 2 to form battery assembly 10, the top face of battery assembly 10 is covered with insulating member 6, and the surface of battery assembly 10 is covered with outer covering sheet 8.

### (Cylindrical Battery 1)

Each cylindrical battery 1 is a cylindrical battery cell whose outer covering can is in the shape of a cylinder. Examples of cylindrical battery 1 that can be used include a cylindrical battery in which an electrode body is accommodated in a cylindrical metal outer covering can filled with an electrolyte and the opening of the outer covering can is hermetically sealed with a sealing plate. Cylindrical battery 1 includes end-face electrodes 11 at both longitudinal ends thereof. In cylindrical battery 1, electrodes provided in the bottom of the outer covering can and a center part of the sealing plate, which are end-faces at both ends, are used as positive and negative electrodes. In cylindrical battery 1 illustrated in the drawings, a projecting electrode disposed at the center part of the sealing plate serves as first electrode 11A, and a bottom electrode in the outer covering can serves as the other one of end-face electrodes 11, namely, second electrode 11B.

Non-aqueous electrolyte secondary batteries with high energy efficiency such as lithium-ion secondary batteries are suitably used as cylindrical batteries 1. However, in the battery pack of the present invention, the cylindrical batteries are not limited to lithium-ion secondary batteries. All types of chargeable batteries, such as nickel hydride batteries and nickelcadmium batteries, can be used as the cylindrical batteries.

### (Battery Holder 2)

Battery holder 2 holds cylindrical batteries 1 in the predetermined position. Battery holder 2 includes holding tube 20 configured to internally accommodate cylindrical battery 1 and cover outer circumferential face 12 of cylindrical battery 1. Battery holder 2 illustrated in the drawings includes a plurality of holding tubes 20 configured to accommodate cylindrical batteries 1 positioned in parallel. Battery holder 2 illustrated in the drawings holds cylindrical batteries 1 so that cylindrical batteries 1 are longitudinally parallel to each other and end-face electrodes 11 at each end are disposed in the same plane. Battery holder 2 is molded of resin and has a shape formed by coupling holding tubes 20. Battery holder 2 is preferably made of a material having excellent insulation properties and heat resistance, for example, made of resin such as polycarbonate or ABS.

Battery holder 2 illustrated in the drawings is in the shape of a box, in which cylindrical batteries 1 are disposed in multiple rows and columns. Battery holder 2 configured to accommodate cylindrical batteries 1 in multiple rows and columns is formed in such a manner that holding tubes 20 are coupled in multiple rows and columns. Each of holding tubes 20 includes: partition wall 23 disposed between cylindrical batteries 1 accommodated adjacent to each other; and surrounding wall 22 forming the outer face of battery holder 2. Battery pack 100 of the present invention is characterized in that each of holding tubes 20 constituting battery holder 2 includes exposure window 8 configured to allow a part of outer circumferential face 12 of accommodated cylindrical battery 1 to be exposed therefrom, and an exposed part exposed from exposure window 8 to the outside is fixed to battery holder 2 via adhesive member 5, whereby cylindrical battery 1 accommodated in holding tube 20 is prevented from rotating in battery holder 2. Thus, in each of holding tubes 20 constituting battery holder 2, exposure window 8 is opened to allow cylindrical battery 1 to be partially exposed therefrom. As illustrated in the drawings, in battery holder 2 configured to accommodate cylindrical batteries 1 in multiple rows and columns, partition wall 23 is provided between cylindrical batteries 1 adjacent to each other and surrounding wall 22 is provided in a region forming the outer face of battery holder 2. Thus, in battery holder 2, exposure window 8 is provided to be opened in surrounding wall 22 of each of holding tubes 20. As illustrated in FIG. 3, in battery holder 2, end-face electrodes 11 of cylindrical battery 1 are respectively disposed in first face 2A and third face 2C of battery holder 2 having a box-shaped external form, and, in each of second face 2B and fourth face 2D of battery holder 2, exposure window 8 is opened to allow cylindrical battery 1 to be partially exposed therefrom.

Battery holder 2 illustrated in FIG. 4 and FIG. 6 includes eight holding tubes 20 connected in four rows and two columns in parallel. The internal shape of holding tube 20 is nearly equal to the external shape of cylindrical battery 1 to form battery accommodation unit 21. Battery holder 2 illustrated in the drawings holds eight cylindrical batteries 1 disposed vertically and horizontally in four rows and two columns in the drawings. In battery holder 2 illustrated in the drawings, eight cylindrical batteries 1 are disposed in a matrix to form a symmetrical pattern when viewed from the front. This structure has an advantage in that battery holder 2 in which cylindrical batteries 1 are disposed in multiple rows can be kept in a stable upright posture. The number and arrangement of cylindrical batteries 1 are not limited to the above-described configuration. The number of cylindrical batteries 1 may be seven or less or may be nine or more. Besides the matrix arrangement, cylindrical batteries 1 may be disposed staggered in an alternating manner. In battery pack 100 illustrated in the drawings, eight cylindrical batteries 1 are arranged in two columns in the horizontal direction and stacked in four rows in the vertical direction. However, neither the arrangement of cylindrical batteries in the battery pack nor the installation orientation of the battery pack is not specified.

In battery pack 100 of the present invention, outer circumferential faces 12 of all cylindrical batteries 1 accommodated in battery holder 2 are partially exposed to the outside. Accordingly, when cylindrical batteries 1 are stacked in the vertical direction in three or more rows, cylindrical batteries 1 are arranged in the horizontal direction in two or fewer columns. When cylindrical batteries 1 are arranged in the horizontal direction in three or more columns, cylindrical batteries 1 are stacked in the vertical direction in two or fewer rows. In other words, by ensuring that the number of cylindrical batteries 1 arranged in the horizontal or vertical direction is two or less, exposure window 8 can be opened in surrounding wall 22 provided in each holding tube 20. In battery pack 100 illustrated in FIG. 3, first face 2A and third face 2C of battery holder 2 in each of which lead plate 3 is disposed are arranged in the front-rear direction, and second face 2B and fourth face 2D including exposure windows 8 are arranged in the horizontal direction. Note that, in the battery pack, first face 2A and third face 2C of battery holder 2 in each of which lead plate 3 is disposed can be arranged in the vertical direction, thereby being top and bottom faces, or second face 2B and fourth face 2D including exposure windows 8 can be arranged in the vertical direction, thereby being top and bottom faces. In the battery holder illustrated in the drawings, exposure windows 8 are provided in second face 2B and fourth face 2D of battery holder 2 in which cylindrical batteries 1 are disposed in multiple rows, but the exposure windows can be provided in fifth and sixth faces.

Battery holder 2 illustrated in FIG. 4 is divided into first holder 2X and second holder 2Y in the longitudinal direction of cylindrical battery 1. Battery holder 2 illustrated in the drawings includes battery accommodation unit 21 formed by coupling first holder 2X to second holder 2Y at the opening and configured to internally accommodate cylindrical battery 1, each of first holder 2X and second holder 2Y being formed by molding end-face plate 26 integrally with an end of one of divided holding tubes 20. Battery holder 2 allows long, thin cylindrical batteries 1 to be smoothly inserted thereinto. First holder 2X and second holder 2Y are produced separately by resin molding, and, when cylindrical battery 1 is inserted, first holder 2X and second holder 2Y are coupled to each other. First holder 2X and second holder 2Y include cylindrical battery accommodation unit 21 to insert cylindrical battery 1 thereinto and dispose cylindrical battery 1 in a predetermined position. The internal shape of battery accommodation unit 21 is approximately the same as the external shape of cylindrical battery 1. More precisely, the internal shape of battery accommodation unit 21 is slightly larger than the external shape of cylindrical battery 1 to allow cylindrical battery 1 to be easily inserted and disposed in the predetermined position. First holder 2X and second holder 2Y with this structure are coupled to each other in a predetermined position via cylindrical battery 1 by inserting both ends of cylindrical battery 1 thereinto. First holder 2X and second holder 2Y are coupled by an engagement structure. Second holder 2Y illustrated in FIG. 4 includes engagement hook 27 molded integrally therewith and axially extending to the outside of holding tube 33, and first holder 2X includes engagement unit 28 facing engagement hook 27 and configured to guide engagement hook 27. By coupling engagement hook 27 to engagement unit 28, first holder 2X and second holder 2Y are coupled to each other without coming apart.

Battery holder 2 described above is configured to be divided into first holder 2X and second holder 2Y in a middle part of the holding tube. However, although not illustrated, the battery holder can be configured to include two members: a body formed by integrating one end of the holding tube configured to accommodate almost the entirety of a cylindrical battery with an end-face plate; and a lid including an end-face plate disposed in the opening at the other end of the holding tube. Alternatively, the battery holder can be configured to include three members: a body including a holding tube having openings at both ends thereof and configured to accommodate almost the entirety of the cylindrical battery; and a pair of lids each including an end-face plate disposed in the opening at a corresponding one of the ends of the body.

In battery assembly 10 illustrated in FIG. 4 and FIG. 6, non-melting plate 13 is provided inside partition wall 23 disposed between adjacent cylindrical batteries 1. Non-melting plate 13 is a plate that is not deformed at the temperature of abnormally heated cylindrical battery 1, preferably an inorganic plate such as a mica plate. In battery holder 2 illustrated in the drawings, cylindrical batteries 1 are disposed in four rows and two columns, and accordingly, partition walls 23 are vertically provided in the cross form between eight cylindrical batteries 1 arranged vertically and horizontally. Inside partition wall 23, insertion space 14 into which non-melting plate 13 is inserted is provided. When any one of cylindrical batteries 1 has thermal runaway and generates abnormal heat, battery block 10 can prevent thermal runaway from being induced in adjacent cylindrical battery 1.

Furthermore, in battery holder 2, connection window 24 configured to allow end-face electrode 11 to be exposed and connected to lead plate 3 is opened in end-face plate 26 facing end-face electrode 11 of cylindrical battery 1. Connection window 24 configured to guide a projection electrode, namely, first electrode 11A, is larger than the external shape of the projection electrode and is large enough to insert the projection electrode thereinto. Connection window 24 allows the projection electrode to be disposed inside connection window 24 and welded to lead plate 3, and thus lead plate 3 can be welded to first electrode 11A with a smaller difference in level between lead plate 3 and first electrode 11A exposed from connection window 24. Connection window 24 disposed to face the bottom of the outer covering can, namely, second electrode 11B, is opened widely enough to guide welded part 33 of lead plate 3 to second electrode 11B.

Furthermore, in the upper part of battery holder 2, accommodation region 25 is provided to accommodate circuit board 4. In battery holder 2 illustrated in FIG. 3, front, rear, left, and right surrounding walls project from the top face of battery holder 2, and a recession is provided inside the four surrounding walls to form accommodation region 25 for circuit board 4. In battery holder 2 illustrated in FIG. 6, a space in the bottom of accommodation region 25 is provided to dispose circuit board 4. Circuit board 4 illustrated in FIG. 3 has an outer circumferential shape matching the inner circumference of accommodation region 25 and is disposed in a predetermined position. The circuit board may be directly fixed to the battery holder in the installation region thereof by screwing or other means, or a board holder may be separately provided to hold the circuit board.

### (Exposure Window 8)

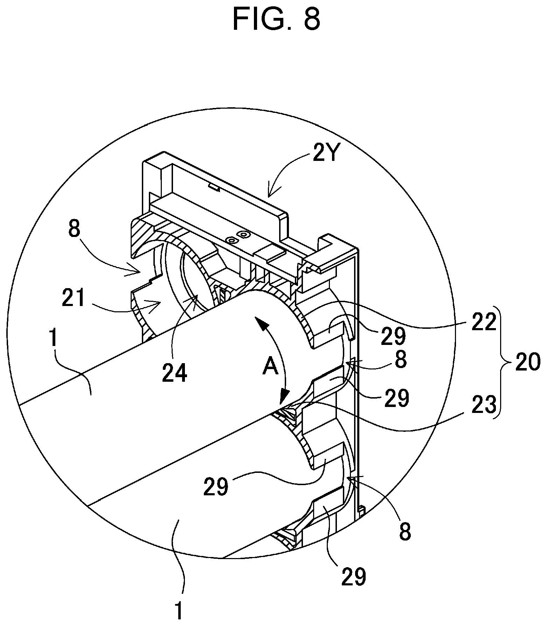

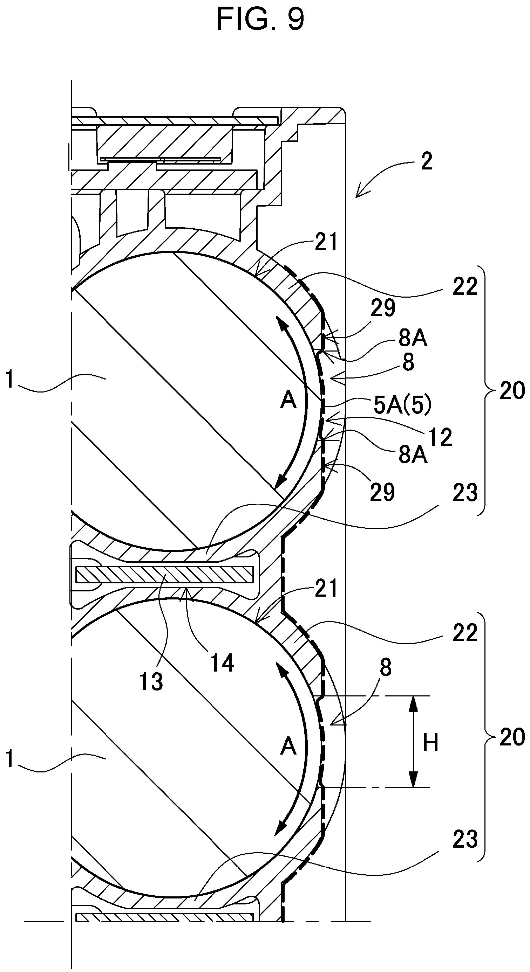

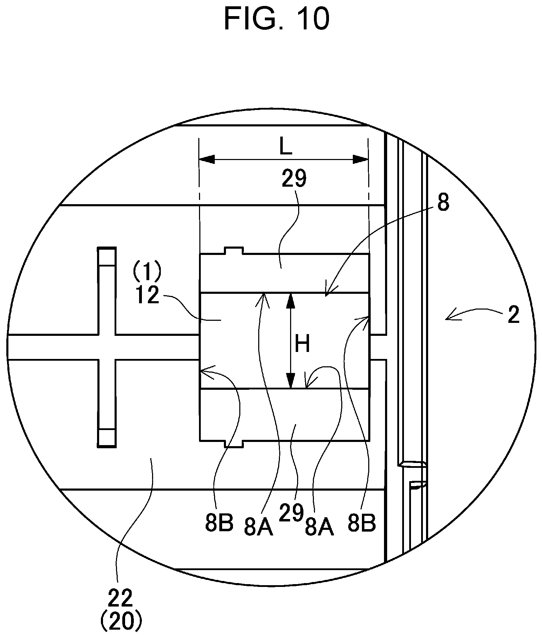

As illustrated in FIG. 3 to FIG. 10, exposure window 8 is provided in surrounding wall 22 of holding tube 20 and allows a part of outer circumferential face 12 of cylindrical battery 1 accommodated in battery accommodation unit 21 to be exposed from exposure window 8. Exposure window 8 illustrated in FIG. 10 is in the shape of a rectangle in the front view, exposure window 8 including a pair of first opening edges 8A cut in the direction of a generating line of holding tube 20 and a pair of second opening edges 8B cut in a direction intersecting first opening edges 8A. Furthermore, in the opening edge of window 8 illustrated in FIG. 8 to FIG. 10, cut faces 29 of holding tube 20, which are formed by cutting holding tube 20 along the pair of first opening edges 8A, are provided. In battery holder 2 illustrated in FIG. 9, cut faces 29 are provided in such a manner that holding tube 20 is cut in a direction inclined relative to the radial direction of cylindrical battery 1 to make the area of cut faces 29 larger. In battery holder 2 illustrated in FIG. 9, the pair of cut faces 29 formed on both sides of exposure window 8 is in the shape of a plane extending in the direction of a tangent to the center part of outer circumferential face 12 of cylindrical battery 1 exposed from exposure window 8 in the transverse-sectional view of holding tube 20.

As described above, cut faces 29 formed on both sides of window 8 are suitable for attaching adhesive tape 5A used as adhesive member 5, although described in detail below. In particular, cut faces 29 are suitable for fixing an exposed part of cylindrical battery 1 to battery holder 2 by attaching adhesive tape 5A to cut faces 29 formed along first opening edges 8A being the opening edge of exposure window 8 and extending in the direction of a generating line of holding tube 20. This is because adhesive tape 5A is attached to cut faces 29 provided on both sides of exposure window 8 and positioned in the direction that cylindrical battery 1 could rotate inside holding tube 20 as indicated by arrow A in FIG. 9, whereby cylindrical battery 1 can be fixed to battery holder 2. With this structure, when adhesive tape 5A is applied, adhesive tape 5A is attached across cut faces 29 on both sides, so that both sides of adhesive tape 5A attached to outer circumferential face 12 of cylindrical battery 1 are attached to cut faces 29, whereby cylindrical battery 1 can be securely fixed to battery holder 2. In particular, with adhesive tape 5A being stretched, adhesive tape 5A can be attached at a predetermined position in exposure window 8, and accordingly cylindrical battery 1 can be fixed easily and simply with ease of positioning of adhesive tape 5A.

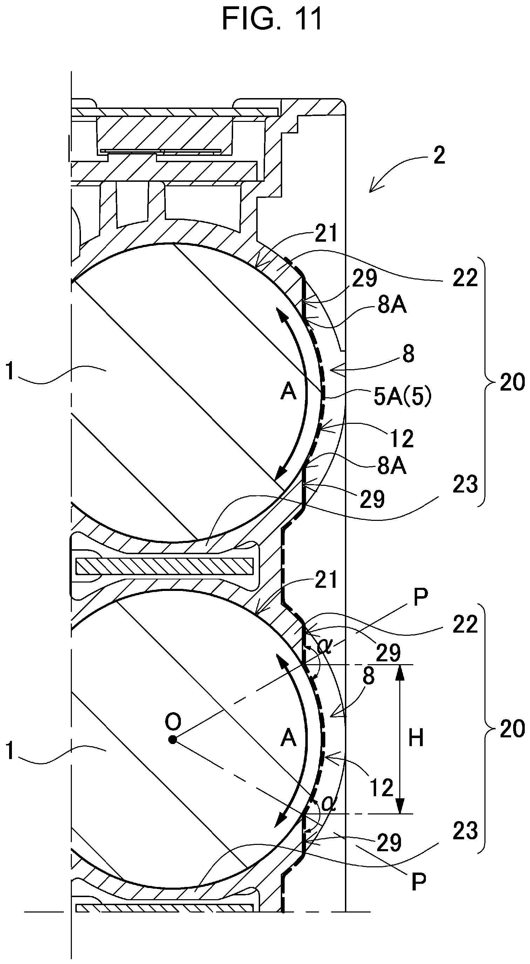

As described above, the structure in which the pair of cut faces 29 extending in the direction of a tangent to outer circumferential face 12 is provided on both sides of exposure window 8 has an advantage in that the exposed part of cylindrical battery 1 can be securely fixed to battery holder 2 via adhesive tape 5A, while an opening-width (H), which is the distance between the pair first opening edges 8A, is made smaller. Window 8 can be configured such that the opening width (H), which is the distance between the pair of first opening edges 8A, is made larger to cause the exposed part of cylindrical battery 1 to project to the outside, as illustrated in FIG. 11. In battery holder 2 illustrated in FIG. 11, each of cut faces 2 provided on both sides of window 8 is inclined relative to plane P including central axis O of cylindrical battery 1 and first opening edge 8A and forms an obtuse angle α with outer circumferential face 12 of cylindrical battery 1 exposed from exposure window 8. Battery holder 2 with this structure has an advantage in that the exposed part of cylindrical battery 1, which is exposed from exposure window 8, is larger to make the attachment area of adhesive tape 5A larger. In battery holder 2 described above, cut faces 29 of holding tube 8 are in the shape of a plane, but can be curved faces. Thus, the structure in which cut faces 29 of holding tube 20 are slope or curved faces has an advantage in that cut faces 29 have a larger area, and accordingly adhesive tape 5A can be securely attached to cut faces 29 in a larger area.

In exposure window 8 in the shape of a rectangle in the front view as illustrated in FIG. 10, the opening width (H), which is the distance between the pair of first opening edges 8A, and an opening length (L), which is the distance between the pair of second opening edges 8B, can be variously changed, depending on the width and adhesive strength of adhesive tape 5A to be used. The opening width (H), which is the distance between the pair of first opening edges 8A, can be, for example, 0.3 to 1.0 times the radius (r) of accommodated cylindrical battery 1. The opening length (L), which is the distance between the pair of second opening edges 8B, can be, for example, 1 to 1.5 times the width (W) of adhesive tape 5A, that is, 8 mm to 20mm.

In battery holder 2 illustrated in FIG. 3 to FIG. 5, exposure window 8 is positioned at an end of holding tube 20 to face the longitudinal ends of cylindrical battery 1. This structure has an advantage in that an end part of the cylindrical battery, the end part being closer to end-face electrode 11 connected to lead plate 3, is securely fixed to battery holder 2, whereby faulty connections between end-face electrode 11 and lead plate 3 can be effectively prevented. Note that the exposure window can be provided in a middle part of the holding tube to face a center part of the cylindrical battery.

Furthermore, in battery holder 2 illustrated in FIG. 3 to FIG. 5, exposure windows 8 opened in holding tubes 20 are disposed on a straight line in the front view, and cylindrical batteries 1 are fixed to battery holder 2 via a single piece of adhesive tape 5A attached across exposure windows 8. With this structure, the single piece of adhesive tape 5A is attached across exposure windows 8, whereby cylindrical batteries 1 can be efficiently fixed to battery holder 2 to reduce manufacturing time. Note that a single piece of adhesive tape 5A may be attached to one exposure window 8 to fix one cylindrical battery 1.

Furthermore, in battery holder 2 illustrated in FIG. 3 to FIG. 5, exposure window 8 is provided to face one end of cylindrical battery 1 inserted into holding tube 20, in other words, exposure window 8 is provided only at an end of second holder 2Y in the drawings. However, in the battery holder, although not illustrated, the exposure window can be provided to face both ends of the cylindrical battery inserted into the holding tube, in other words, the exposure windows can be provided at both an end of the first holder and an end of the second holder. With this structure, both ends of the cylindrical battery can be fixed to the battery holder, whereby the cylindrical battery can be further effectively prevented from rotating.

### (Adhesive Member 5)

Adhesive member 5 fixes an exposed part of cylindrical battery 1 exposed from exposure window 8 of holding tube 20 to battery holder 2 to prevent cylindrical battery 1 from rotating inside holding tube 20. Adhesive tape 5A or adhesive agent 5B can be used as adhesive member 5.

As adhesive tape 5A, what is obtained by providing an adhesive or sticky layer to one side of a strip of sheet material can be used. The adhesive or sticky layer provided on one side of adhesive tape 5A and serving as an adhesive face adheres to an exposed part of cylindrical battery 1 exposed from exposure window 8, and the adhesive face also adheres to the opening edge adjacent to the exposed part, whereby cylindrical battery 1 is fixed to battery holder 2. Thus, adhesive tape 5A adheres to the exposed part of cylindrical battery 1 exposed by exposure window 8 and the opening edge of exposure window 8, and is thereby fixed to battery holder 2.

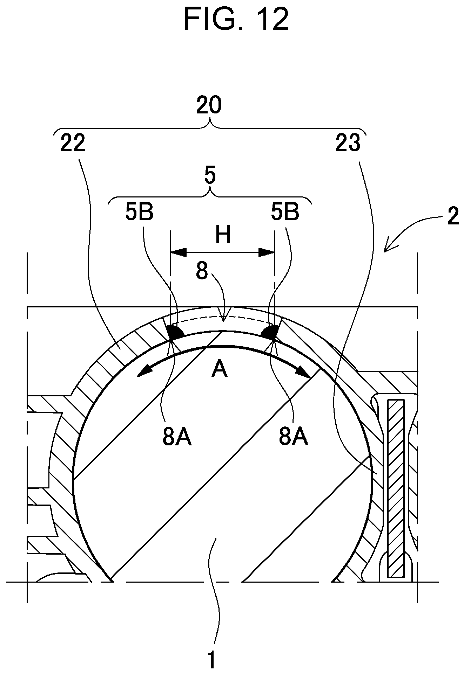

Adhesive agent 5B serving as adhesive member 5 can be liquid, gel, or solid, for example. Adhesive agent 5B is preferably cured in a short time and exhibits excellent adhesive strength. Examples of such adhesive agent that can be used include epoxy- and acrylic-based adhesive agents. Thus, when adhesion member 5 is adhesive agent 5B, holding tube 20 can be cut to form an opening so that the opening edge of exposure window 8 is in agreement with the radial direction of cylindrical battery 1, as illustrated in FIG. 12, for example.

Exposure window 8 illustrated in FIG. 12 may be in the shape of a rectangle in the front view, exposure window 8 including a pair of first opening edges 8A cut in the direction of a generating line of holding tube 20 and a pair of second opening edges 8B cut in a direction intersecting first opening edges 8A, as described above. Adhesive agent 5B to be applied to exposure window 8 having the above-mentioned shape can be applied to at least the boundaries between the pair of first opening edges 8A and outer circumferential face 12 of cylindrical battery 1, as illustrated in FIG. 12. This structure has an advantage in that the rotation of cylindrical battery 1 can be more effectively prevented because first opening edges 8A arranged in the direction of rotation of cylindrical battery 1 are fixed to the outer circumferential face of cylindrical battery 1 by adhesive agent 5B. In addition, the entirety of exposure window 8 can be filled with adhesive agent 5B, as illustrated by a chain line in the drawing.

Furthermore, in the structure for fixing cylindrical battery 1 to battery holder 2 by using adhesive agent 5B as adhesive member 5, exposure window 8 does not necessarily need to be in the shape of a rectangle in the front view, but can have various shapes such as circular, oval, and polygonal shapes. Adhesive agent 5B to be applied to outer circumferential face 12 of cylindrical battery 1 is fixed to the opening edge of exposure window 8, and, even when the adhesion between adhesive agent 5B and battery holder 2 decreases to cause the separation thereof, adhesive agent 5B firmly adheres to outer circumferential face 12 of cylindrical battery 1 and therefore adhesive agent 5B acts as a stopper disposed in window 8 to prevent cylindrical battery 1 from rotating. Hence, as the adhesive agent, an adhesive agent having excellent adhesive strength to outer circumferential face 12 of cylindrical battery 1 can be used. Examples of adhesive agent 5B that can be used include epoxy and acrylic adhesive agents.

### (Lead Plate 3)

In battery pack 100 illustrated in the drawings, end-face electrodes 11 at both ends of cylindrical batteries 1 held in the predetermined position by battery holder 2 are connected by lead plates 3. Lead plate 3 is manufactured by press-forming a metal plate with excellent electrical conductivity and is fixed by welding to end-face electrodes 11 provided in the end faces of cylindrical batteries 1 in battery holder 2. Battery assembly 10 illustrated in FIG. 2 and FIG. 3 includes eight cylindrical batteries 1 connected in series and in parallel by lead plates 3. Battery assembly 10 illustrated in FIG. 4 is configured such that, in the drawing, parallel units 1X are arranged in the horizontal direction in two columns, each of parallel units 1X being formed of four cylindrical batteries stacked in the vertical direction in four rows and connected in parallel, and parallel units 1X on the left and right sides are connected in series to form battery block 1Y including eight cylindrical batteries 1 with four rows connected in parallel and two columns connected in series. Battery assembly 10 is configured such that, as illustrated in FIG. 3, two sets of parallel units 1X are connected in series by intermediate lead plate 3B in third face 2C of box-shaped battery holder 2, and, as illustrated in FIG. 5 and FIG. 7, the output sides of parallel units 1X connected in series are connected to output lead plate 3A in first face 2A of battery holder 2.

Output lead plate 3A includes: first output lead plate 3Aa configured to connect first electrodes 11A of cylindrical batteries 1 constituting parallel unit 1X; and second output lead plate 3Ab configured to connect second electrodes 11B of cylindrical batteries 1 constituting parallel unit 1X, on the output side of battery block 1Y. First output lead plate 3Aa illustrated in FIG. 3 is disposed on the right side of first face 2A of battery holder 2 having a box-shaped external form and is connected to vertically adjacent first electrodes 11A. First output lead plate 3Aa illustrated in FIG. 3 is formed in such a manner that superimposition parts 31 and welded parts 33 are alternately coupled, in which superimposition parts 31 are to be superimposed on a surface of battery holder 2, the surface being in the opening edge of connection window 24, and welded parts 33 are each formed in a stepped shape to be lower in level by one step than superimposition part 31 and connected to first electrode 11A disposed in connection window 24,. First output lead plate 3Aa is folded so that the longitudinal cross-sectional shape of first output lead plate 3Aa is an approximately rectangular wave shape formed of superimposition parts 31 and welded parts 33, which are alternately connected. First output lead plate 3Aa connects first electrodes 11A of four cylindrical batteries 1, hence includes four welded parts 33 disposed vertically and superimposition parts 31 disposed between welded parts 33 and disposed outside welded parts 33.

Intermediate lead plate 3B includes plate-like superimposition part 38 disposed over almost the entirety of third face 2C of battery holder 2 and connected to end-face electrodes 11 of vertically and horizontally adjacent cylindrical batteries 1. Intermediate lead plate 3B connects vertically-adjacent cylindrical batteries 1 in parallel and also connects horizontally-adjacent cylindrical batteries 1 in series by using plate-like superimposition part 38 in third face 2C of battery holder 2. In intermediate lead plate 3B, welded part 33 to be welded to the end-face electrode of cylindrical battery 1 is provided in plate-like superimposition part 38. Welded part 33 extends from plate-like superimposition part 38 in a stepped manner, and even when there is a difference in level between the surface of battery holder 2 and the surface of end-face electrode 11, welded part 33 is in surface contact with the surface of end-face electrode 11 to increase the reliability of welding. In the present embodiment, horizontally-adjacent cylindrical batteries 1 are connected in series, and accordingly, intermediate lead plate 3B is formed in the shape of a plane to have no step in plate-like superimposition part 38 involved in the series connection.

Furthermore, in second output lead plate 3Ab, welded part 33 configured to be connected to second electrode 11B is provided in plate-like superimposition part 38 configured to connect second electrodes 11B of adjacent cylindrical batteries 1. Here, second output lead plate 3Ab and intermediate lead plate 3B are configured such that welded part 33 to be connected to second electrode 11B is coupled to plate-like superimposition part 38 via melt-cut part 41 stretched in a long and narrow shape, and, by melt-cutting melt-cut part 41 with an overcurrent, cylindrical battery 1 can be surely disconnected from lead plate 3.

Lead plate 3 further includes connection terminals 39 projecting upward and configured to be coupled to circuit board 4. Connection terminal 39 drawn from output lead plate 3A is connected to circuit board 4 to supply the output of battery block 1Y to circuit board 4. Connection terminal 39 drawn from intermediate lead plate 3B is connected to circuit board 4 to supply the intermediate voltage of battery block 1Y to circuit board 4.

### (Circuit Board 4)

Electronic circuits, such as a voltage detection circuit configured to detect the total potential and intermediate potential of battery block 1Y in which cylindrical batteries 1 are connected in series and in parallel, a control circuit configured to control charging and discharging, and a protection circuit, are mounted on circuit board 4. Circuit board 4 is formed in the shape of a rectangular and disposed in accommodation region 25 provided in the upper part of battery holder 2.

### (Insulating Plate)

The battery pack can further include an insulating plate, although not illustrated in the drawings, which is superimposed on a surface of lead plate 3 fixed to battery holder 2 and configured to cover and insulate lead plate 3. Suitable use is made of an insulating plate that is made of resin or paper and is inexpensive and easy to handle and excellent in heat resistance and flame retardance against the heat of emissions such as exhaust gas from cylindrical batteries 1. Examples of the insulating plate that can be used include aramid paper (Nomex [registered trademark], manufactured by DuPont). The above-described insulating plate includes, for example: a first insulating plate disposed in first face 2A of battery holder 2 having a box-shaped external form and configured to cover output lead plate 3A; a second insulating plate disposed in third face 2C of battery holder 2 and configured to cover intermediate lead plate 3B; a third insulating plate disposed in second face 2B of battery holder 2 and configured to cover connection terminal 39 of first output lead plate 3Aa; and a fourth insulating plate disposed in fourth face 2D of battery holder 2 and configured to cover connection terminal 39 of second output lead plate 3Ab.

### (Outer Covering Sheet 7)

Battery assembly 10 in which the insulating plate is disposed on the surface of lead plate 3 and the surface of circuit board 4 is covered with insulating member 6 is covered with outer covering sheet 7 as illustrated in FIG. 1. As illustrated in FIG. 2, outer covering sheet 7 is in the form of a heat-shrinkable bag or tube and covers battery assembly 10 by being heat-shrunk in the state of internally accommodating battery assembly 10. For outer covering sheet 7, resin, such as PET, having excellent insulating properties and stability can be preferably used. In particular, a shrinkable tube made of PET is inexpensive and therefore preferably used as a heat-shrinkable tube. Outer covering sheet 7 is melted by emissions such as hot exhaust gas from a safety valve of first electrode 11A of cylindrical battery 1 and the emissions are immediately exhausted to the outside of battery pack 100.

### (Lead Wire 18, Connector 19)

In battery pack 100 illustrated in FIG. 1 to FIG. 5, a plurality of lead wires 18 is connected to circuit board 4 and drawn out from battery assembly 10 to the outside. Lead wires 18 include positive and negative power lines and signal lines, and are connected directly to a connector of an apparatus in which battery pack 100 is installed. One end of each lead wire 18 is connected to circuit board 4 and the other end thereof is connected to connector 19.

The battery pack 100 described above is assembled through the following steps.
(1) Cylindrical batteries 1 and non-melting plates 13 are disposed in predetermined positions in first holder 2X and second holder 2Y, and first holder 2X and second holder 2Y are coupled. First holder 2X and second holder 2Y are coupled in a state in which each of cylindrical batteries 1 is inserted into a corresponding one of battery accommodation units 21 and each of non-melting plates 13 is inserted into a corresponding one of insertion spaces 14 in partition walls 23. First holder 2X and second holder 2Y are coupled in a predetermined position via built-in cylindrical batteries 1 and non-melting plates 13 and furthermore coupled without coming apart, by an engagement structure provided to face between first holder 2X and second holder 2Y.
(2) Outer circumferential face 12 of cylindrical battery 1, which is exposed from exposure window 8 opened in each of holding tubes 20 of battery holder 2, is fixed to battery holder 2 by adhesive member 5. When adhesive member 5 is adhesive tape 5A, an adhesive face of adhesive tape 5A is attached and fixed to outer circumferential face 12 of cylindrical battery 1 exposed from exposure window 8 and to the opening edge of exposure window 8. When adhesive member 5 is adhesive agent 5B, adhesive agent 5B is applied to the boundary between outer circumferential face 12 of cylindrical battery 1 exposed from exposure window 8 and the opening edge of exposure window 8, and then adhesive agent 5B is cured to fix outer circumferential face 12 of cylindrical battery 1 to battery holder 2.
(3) Lead plates 3 are connected to end-face electrodes 11 of cylindrical batteries 1, which are exposed from both end faces of battery holder 2 so that all cylindrical batteries 1 accommodated in battery holder 2 are electrically connected. Lead plates 3 are electrically connected and fixed to end-face electrodes 11 of cylindrical batteries 1 by welding.
(4) Circuit board 4 is coupled to battery holder 2 in a predetermined position. Battery holder 2 illustrated in FIG. 3 includes accommodation region 25 in the upper face thereof and circuit board 4 is disposed in a predetermined position in accommodation region 25.
(5) Connection terminal 39 drawn out from lead plate 3 is electrically connected to circuit board 4 coupled to battery holder 2. Connection terminal 39 is disposed in a predetermined position on circuit board 4 and is electrically and physically connected to circuit board 4 by spot welding or other means. Lead wires 18 connected to circuit board 4 are drawn to the outside and the upper face of battery holder 2 is covered and insulated with insulating member 6. Battery assembly 10 in the above-described state is manufactured as illustrated in FIG. 2.
(6) Battery pack 10 is covered with outer covering sheet 7. As illustrated in FIG. 2, outer covering sheet 7 is in the form of a heat-shrinkable bag or tube and covers battery assembly 10 by being heat-shrunk in the state of internally accommodating battery assembly 10.

Battery pack 100 described above is used as a power source built in a main body of an electrical apparatus such as a speaker. Battery pack 100 supplies power to the main body via lead wires 18 drawn to the outside, or built-in cylindrical batteries 1 are charged with power supplied from the main body. Lead wires 18 drawn from battery pack 100 are connected to a connector of the main body via output connector 19 connected to an end of each lead wire, whereby power is supplied.

### INDUSTRIAL APPLICABILITY

The battery pack according to the present invention can be suitably used as a power source for electrical apparatuses such as wireless speakers, electric cleaners, and power tools. The battery pack can also be used for power supply devices for mobile vehicles such as assisted bicycles and electric carts.

### REFERENCE MARKS IN THE DRAWINGS

100... battery pack
1...cylindrical battery
1X...parallel unit
1Y...battery block
2...battery holder
2X...first holder
2Y...second holder
2A...first face
2B...second face
2C...third face
2D...fourth face
3...lead plate
3A...output lead plate
3Aa...first output lead board
3Ab... second output lead board
3B...intermediate lead plate
4...circuit board
5...adhesive member
5A... adhesive tape
5B...adhesive agent
6...insulating member
7...outer covering sheet
8...exposure window
8A...first opening edge
8B... second opening edge
10...battery assembly
11...end-face electrode
11A...first electrode
11B...second electrode
12...outer circumferential face
13...non-melting plate
14...insertion space
18...lead wire
19...connector
20...holding tube
21...battery accommodation unit
22...periphery wall
23...partition wall
24...connection window
25...accommodation region
26...end-face plate
27...engagement hook
28...engagement unit
29...cut face
31... superimposition part
33...welded part
38...plate-like superimposition part
39...connection terminal
41...melt-cut part
O...central axis
P...plane

## Claims

1. A battery pack, comprising:
a cylindrical battery;
a battery holder configured to dispose the cylindrical battery in a predetermined position,
wherein the battery holder includes a holding tube configured to internally accommodate the cylindrical battery and partially cover an outer circumferential face of the cylindrical battery,
the holding tube includes an exposure window opened to allow a part of the outer circumferential face of the cylindrical battery accommodated to be exposed from the exposure window to outside, and
an exposed part of the cylindrical battery, the exposed part being exposed from the exposure window, is fixed to the battery holder via an adhesive member.

2. The battery pack according to Claim 1,
wherein the cylindrical battery includes a plurality of cylindrical batteries, the holding tube includes a plurality of holding tubes, and the battery holder includes the holding tubes each configured to accommodate a corresponding one of the cylindrical batteries disposed in parallel,
each of the holding tubes includes:
a partition wall disposed between the corresponding one of the cylindrical batteries and a cylindrical battery adjacent to the corresponding one among the plurality of cylindrical batteries; and
a surrounding wall including an outer face of the battery holder, and the exposure window is opened in the surrounding wall.

3. The battery pack according to Claim 2, further comprising:
a lead plate configured to electrically connect the cylindrical batteries disposed in the predetermined position by the battery holder,
wherein each of the cylindrical batteries includes edge-face electrodes at both ends of the cylindrical battery,
the battery holder includes an end-face plate facing the end-face electrodes of the cylindrical batteries, and the end-face plate includes electrode windows each configured to allow a corresponding one of the end-face electrodes to be exposed from each of the electrode windows, and
the lead plate is coupled to the end-face electrodes exposed from the electrode windows to connect the cylindrical batteries in series and/or in parallel.

4. The battery pack according to Claim 3,
wherein the exposure window included in the battery holder is positioned at an end of the holding tube.

5. The battery pack according to any one of Claims 1 to 4,
wherein the adhesive member is an adhesive tape, and an adhesive face of the adhesive tape is attached to the exposed part of the cylindrical battery and an opening edge of the exposure window, the exposed part being exposed from the exposure window.

6. The battery pack according to Claim 5,
wherein the exposure window is in a shape of a rectangle in a front view, the exposure window including:
a pair of first opening edges cut in a direction of a generating line of the holding tube; and
a pair of second opening edges cut in a direction intersecting the pair of the first opening edges, and
the opening edge to which the adhesive tape is attached includes cut faces of the holding tube cut along the pair of the first opening edges.

7. The battery pack according to Claim 6,
wherein the cut faces disposed on both sides of the exposure window are in a shape of a plane in a transverse-sectional view of the holding tube, the plane extending in a direction of a tangent to a center part of the outer circumferential face of the cylindrical battery, the outer circumferential face being exposed from the exposure window.

8. The battery pack according to Claim 6,
wherein an angle between each of the cut faces and the outer circumferential face of the cylindrical battery is an obtuse angle, the each of the cut faces is inclined or curved relative to a plane including a central axis of the cylindrical battery and a corresponding one of the first opening edges, the outer circumferential face being exposed from the exposure window.

9. The battery pack according to any one of Claims 2 to 4,
wherein, in the battery holder, the exposure window opened in each of the holding tubes is disposed on a straight line in the front view,
the exposure window includes a plurality of exposure windows, and
the adhesive member is an adhesive tape, and the adhesive tape is attached across a plurality of the exposure windows to fix the cylindrical batteries to the battery holder.

10. The battery pack according to any one of Claims 1 to 4,
wherein the adhesive member is an adhesive agent.

11. The battery pack according to Claim 10,
wherein the exposure window is in a shape of a rectangle in a front view, the exposure window including:
a pair of first opening edges cut in a direction of a generating line of the holding tube; and
a pair of second opening edges cut in a direction intersecting the pair of the first opening edge, and
the adhesive agent is applied to at least boundaries between the pair of the first opening edges and the outer circumferential face of the cylindrical battery.
